# EUROPÄISCHE PATENTSCHRIFT

(11) **EP 0 458 011 B1**
(45) Veröffentlichungstag und Bekanntmachung des Hinweises auf die Patenterteilung: **03.11.1993**
(21) Anmeldenummer: 91101744.0
(22) Anmeldetag: 08.02.1991
(51) Int. Cl.: F01N 7/18, F16L 27/10, F16L 51/02

(54) **Leitungselement, insbesondere für die Abgasleitung von Verbrennungskraftmaschinen**
Pipe component, especially for the exhaust conduit of internal combustion engines
Elément de conduite, en particulier pour tuyau d'échappement des moteurs à combustion interne

(30) Priorität: 22.05.1990 DE 4016453
(43) Veröffentlichungstag der Anmeldung: 27.11.1991
(73) Patentinhaber: Witzenmann GmbH Metallschlauch-Fabrik Pforzheim, D-75175 Pforzheim (DE)
(72) Erfinder: Winter, Klaus, Dipl.-Ing., D-7070 Schwäbisch Gmünd (DE); Wünschmann, Manfred, Dipl.-Ing., D-7501 Pfinztal 2 (DE)
(74) Vertreter: Lemcke, Rupert, Dipl.-Ing.

(56) Entgegenhaltungen:
- EP-A- 0 282 689
- FR-A- 2 324 866
- FR-A- 2 634 535
- US-A- 4 147 185

## Beschreibung

Die Erfindung betrifft ein Leitungselement, insbesondere für die Abgasleitung von Verbrennungskraftmaschinen, bestehend aus einem gewellten und/oder einem aus wenigstens einem Band gewickelten Metallschlauch mit außerhalb des Metallschlauches entlang diesem angeordneter, mit den Anschlußenden des Metallschlauches verbundenen Mitteln zur flexiblen Abstützung des Metallschlauches gegen betriebsbedingte Längenänderungen.

Derartige in die Abgasleitung von Kraftfahrzeugen eingesetzte, flexible Leitungselemente sind allgemein bekannt und vielfach im Einsatz. Sie dienen dazu, betriebsbedingte Relativbewegungen zwischen Motor einerseits und der Abgasleitung, die üblicherweise fest, gegebenenfalls unter Einschaltung flexibler Stützteile, am Fahrzeugboden installiert ist, auszugleichen und dabei auch die Motorschwingungen gegenüber der Fahrzeugkarosserie abzukoppeln bzw. zu dämpfen.

Der Metallschlauch solcher Leitungselemente kann aus einem ein- oder mehrwandigen Wellschlauch oder auch aus einem Wickelschlauch bestehen, der so profiliert ist, daß eine anforderungsgerechte Dichtheit erreicht wird. Dies kann z. B. ein Agraffschlauch sein, der durch schraubengangförmiges Wickeln wenigstens eines Metallbandes hergestellt wird, indem benachbarte Bandkanten miteinander verfalzt werden. Auch Kombinationen dieser beiden Schlaucharten sind möglich, wie dies beispielsweise durch die EP-A-O 282 689 bekannt ist, nach der innerhalb eines Wellschlauches ein Agraffschlauch angeordnet ist. Damit sich der flexible Metallschlauch nicht ungebührlich längen kann, erhält er eine Längsabstüzung, die die beiden Enden des Metallschlauches auf einer bestimmten Maximaldistanz hält. Zur Bildung dieser Längsabstützung ist es vielfach üblich, um den Metallschlauch einen Schlauch aus Metalldrahtgeflecht zu legen, der mit den Enden des Metallschlauches fest verbunden ist beispielsweise dadurch, daß er zwischen den Metallschlauchenden und auf diese aufgesetzten Klemmringen eingespannt sowie mit diesen Teilen verklemmt oder verscheißt ist. Da ein solcher Geflechtsschlauch die Eigenschaft hat, seinen Durchmesser zu verringern, wenn er gestreckt wird, führt dies bei einer Längung des Metallschlauches dazu, daß sich der Geflechtsschlauch auf der Außenseite des Metallschlauches anlegt und dadurch dann eine weitere Vergrößerung des Abstandes zwischen den beiden Metallschlauchenden verhindert.

Andere Längsabstützungen können durch an den Enden des Metallschlauches befestigte Seile oder Drähte gegeben sein. Auch ein aus einem Metallband gewickelter Schlauch wie beispielsweise ein Agraffschlauch eignet sich zur Längsabstützung, da dessen Längenvergrößerbarkeit eine bestimmte, konstruktionsbedingte Grenze hat.

Die so vorstehend skizzierten, bekannten Leitungselemente arbeiten zufriedenstellend und haben sich bewährt. Es treten jedoch vermehrt Betriebsbedingungen auf, die die Leitungselemente und dabei insbesondere die Längsabstützung stoßartig belasten. Man denke hier nur an die in Mode gekommenen, geländegängigen Fahrzeuge. Diese stoßartigen Belastungen betreffen dabei nicht nur die Frage der Längenänderung des Metallschlauches sondern ebenso dessen Belastung durch Lateral- bzw. Winkelversatz zwischen seinen beiden Enden. Treten derartige Belastungen schlagartig auf, so führt dies zu lokalen Spannungsüberhöhungen, durch die sowohl die Längsabstützung als auch der Metallschlauch vorzeitig Schaden nehmen und damit unbrauchbar werden können.

Aufgabe der Erfindung ist es daher, ein Leitungselement der eingangs genannten Art derart weiter zu entwickeln, daß sich eine Verringerung von Spannungsspitzen aus der Zug- bzw. Druckbeanspruchung, aus der Lateral- und Angularbewegung sowie aus äußeren Einflüssen ergibt, indem derartige Beanspruchungen in ihrer Auswirkung gedämpft bzw. abgefedert werden.

Diese Aufgabe ist ausgehend von einem Leitungselement der eingangs genannten Art erfindungsgemäß grundsätzlich dadurch gelöst, daß zwischen Metallschlauch und den Mitteln zur Längsabstüzung ein ringförmiges, flexibles, federnd elastisches Dämpfungskissen aus hitzebeständigem Material angeordnet ist, und daß die Längsabstützung zwischen ihren Enden tonnenförmig radial aufgeweitet ist.

Durch diese erfindungsgemäße Maßnahme ist also zwischen Metallschlauch und Längsabstützung ein verlustbehaftetes "Federelement" in Form des Dämpfungskissens eingebracht, das die radiale Relativbewegung zwischen Metallschlauch und Längsabstützung puffert, so daß diese Bewegung nicht mehr bei entsprechend starker Belastung schlagartig erfolgen kann. Dabei ist es, wie sich später noch zeigen wird, vor allem ohne weiteres auch möglich, der Federcharakteristik bzw. Dämpfungscharakteristik des Dämpfungskissens unterschiedliche, insbesondere mit zunehmender Belastung progressive Gestalt zu geben.

Für die Ausbildung der Längsabstützung ist es auch in diesem Falle zweckmäßig, sie als hohlzylindrisches Metalldrahtgeflecht zu gestalten. Es besteht aber auch die Möglichkeit, daß die Längsabstützung durch ein rohrförmiges, zwischen den Enden tonnenförmig radial aufgeweitetes Teil gebildet ist, das zwischen seinen Enden über den Umfang gleichmäßig verteilt angeordnete, achsparallele Schlitze aufweist.

Eine weitere Möglichkeit besteht darin, daß die Längsabstützung durch über den Umfang des Metallschlauches gleichmäßig verteilt angeordnete, zum Metallschlauch achsparallele Drähte, Seile oder dergleichen gebildet ist, die mit ihren Enden an den Enden des Metallschlauches festgelegt bzw. wenigstens mittelbar befestigt sind.

In weiterer Ausgestaltung eines solchen Gegenstandes kann es zweckmäßig sein, daß radial außerhalb der Längsabstützung an dieser anliegend ein hohlzylindrischer Stützmantel vorgesehen ist, und daß der Stützmantel axial festgelegt, beispielsweise mit einem seiner Enden am zugeordneten Ende des Metallschlauches festgelegt ist. Durch diese Gestaltung ergibt sich die angestrebte Federungs- bzw. Dämpfungseigenschaft auch bezüglich einer Stauchung, also Längenverkürzung des Metallschlauches, indem die Längsabstützung und Dämpfungskissen bei einer solchen Stauchung sich radial aufweiten will, dies jedoch nicht kann, weil sie in Anlage an den Stützmantel kommt.

Zur Ausbildung dieses Stützmantels kann im einfachen Falle ein Rohrstück Verwendung finden. Zweckmäßig kann es jedoch sein, daß der Stützmantel ein flexibler Metallschlauch ist, insbesondere ein Agraffschlauch. Ein solches Bauteil ist billig herzustellen und auf der anderen Seite genügend flexibel, um das Leitungselement hinsichtlich seiner betriebsbedingten Bewegungen nicht zu behindern.

Was die Ausbildung des Dämpfungskissens betrifft, so gibt es dafür äußerst zahlreiche Möglichkeiten, so daß nachfolgend nur versucht werden kann, besonders zweckmäßige und vorteilhafte Ausgestaltungen hervorzuheben, ohne daß dadurch das erfindungsgemäße Prinzip ungebührlich eingeschränkt werden soll. Dabei wird das Augenmerk insbesondere auf Beständigkeit gegen hohe Temperaturen, wie sie bei Abgasleitungen auftreten, gelegt bei gleichzeitig einfacher und kostengünstiger Herstellung. Ein Dämpfungskissen aus gummielastischem Material, das damit nicht ausgeschlossen werden soll, würde aber vergleichsweise problematisch hinsichtlich der Materialwahl im Hinblick auf die hohen auftretenden Temperaturen sein.

Als zweckmäßig hat es sich daher erwiesen, daß das Dämpfungskissen aus einem Metalldrahtgestricke und/oder Metallfasergewirk und/oder Metalldrahtgeflecht und/oder Metalldrahtgewebe besteht. Diese Materialien lassen sich einfach und billig in großen Mengen herstellen und dann auf die gewünschte Form des Dämpfungskissens zusammenpressen, wobei der Grad der Verpressung grundsätzlich die Möglichkeit darstellt, die Feder- bzw. Dämpfungscharakteristik des Dämpfungskissens mehr oder weniger hart bzw. weich einzustellen. Dies kann durch Einbringung entsprechender Füll- und/oder Schmierstoffe ergänzt bzw. unterstützt werden.

Ausgehend von diesem grundsätzlichen Gestaltungsgedanken kann vorgesehen werden, daß sich das Dämpfungskissen über im wesentlichen die gesamte Länge des Metallschlauches zwischen dessen Anschlußenden erstreckt. Damit ergibt sich also ein im wesentlichen hohlzylindrisches Gebilde mit tonnenförmiger Außenkontur.

Andererseits besteht jedoch auch grundsätzlich die Möglichkeit, daß sich wenigstens ein Dämpfungskissen über einen axialen Teilbereich des Metallschlauches erstreckt. Hier kann also beispielsweise auf der Längsmitte des Metallschlauches ein ringförmiges Dämpfungskissen vorgesehen sein. Ebenso besteht jedoch auch die Möglichkeit, daß das Dämpfungskissen aus mehreren über die Länge des Metallschlauches verteilten und entsprechend geformten Ringen besteht, die aneinanderliegend sein können, aber auch mit gegenseitigem axialem Abstand angeordnet sein können je nachdem, welche Gebrauchseigenschaften im Einzelfalle angestrebt werden.

Wie bereits erwähnt, ist es zweckmäßig, daß das Dämpfungskissen entsprechend seiner endgültigen Einbausituation vorgeformt ist. Um diese Gestaltung noch zu unterstützen, ist es vorteilhaft, daß das Dämpfungskissen eine Umhüllung aufweist, die eine Geflechtsummantelung, eine Ummantelung aus Stahlwolle, eine Metallfolie , eine Gestrickummantelung oder dergleichen sein kann. Eine derartige Umhüllung ist insbesondere dann zweckmäßig, wenn das Dämpfungskissen oder dessen Einzelteile partiell keine Abstützung gegenüber einem Nachbarteil haben. Eine solche Situation ist beispielsweise gegeben, wenn mehrere axial beabstandete Ringe das Dämpfungskissen bilden oder wenn die Längsabstützung des Metallschlauches aus Seilen oder Drähten besteht, zwischen denen parallel zum Metallschlauch über dessen Umfang verteilt größere Lücken bestehen.

Zur Einstellung der Federungs- bzw. Dämpfungscharakteristik des Dämpfungskissens gibt es ebenfalls mannigfaltige Möglichkeiten. Erwähnt wurde bereits der unterschiedliche Verdichtungsgrad des das Dämpfungskissen bildenden Materials. Weitere Möglichkeiten bestehen darin, daß das Dämpfungskissen mehrlagig, also sandwich-artig aufgebaut ist, wobei man dann jeder dieser Lagen durch unterschiedliche Gestaltung und Verdichtung eine eigene Charakteristik geben kann, was für alle Lagen insgesamt dann zu einem bestimmten Verhalten führt. Hier ist es insbesondere möglich, durch axiale oder radiale Nebeneinanderschaltung von weichen und harten Lagen eine progressive Federungs- bzw. Dämpfungscharakteristik zu erzielen, durch die das Federungs- bzw. Dämpfungsverhalten für kleinere Belastungen relativ weich ist, sich aber andererseits mit zunehmender Belastung verhärtet.

Neben dem unterschiedlichen Verpressungsgrad der Lagen des Dämpfungskissens besteht zum gleichen Ziele aber auch die Möglichkeit, die Lagen des Dämpfungskissens aus unterschiedlichen Materialien herzustellen, so beispielsweise einerseits aus einem verpreßten Metall drahtgestricke und andererseits aus einem Metallfasergewirk, um die jeweiligen besonderen Eigenschaften dieser Materialien auszunutzen.

Eine andere Möglichkeit kann beispielsweise auch darin bestehen, das Dämpfungskissesn als ringförmigen Hohlkörper auszubilden.

Um das Dämpfungskissen gegebenenfalls in Axialrichtung gegenüber dem Metallschlauch zu fixieren, kann es gerade bei der Ausbildung des Metallschlauches als Wellschlauch zweckmäßig sein, daß der Innenumfang des Dämpfungskissens in wenigstens einen Umlauf der Schlauchwellung eingeformt ist. Dieser Formschluß läßt sich selbstverständlich ebenfalls bei der Vorfertigung des Dämpfungskissens anbringen.

Weitere Merkmale und Einzelheiten der Erfindung ergeben sich aus der nachfolgenden Beschreibung von Ausführungsformen, die auf der Zeichnung teilweise vereinfacht dargestellt sind. In der Zeichnung zeigen:
- Fig. 1: einen Axialschnitt durch ein Leitungselement der erfindungsgemäßen Art mit einer ersten Ausbildung des Dämpfungskissens;
- Fig. 2: eine Teilansicht des Gegenstandes gemäß Fig. 1 mit einer anderen Ausbildung des Dämpfungskissens;
- Fig. 3: eine weitere Ausführung nach der Erfindung, teilweise axial geschnitten;
- Fig. 4 bis 7: Varianten in der Ausbildung des Dämpfungskissens;
- Fig. 8: eine besondere Ausbildung der Längsabstützung;
- Fig. 9: eine weitere Variante hinsichtlich Ausbildung der Längsabstützung und des Dämpfungskissens und
- Fig. 10: die Ausbildung eines Leitungselementes mit gleichzeitiger gedämpfter Druckabstützung.

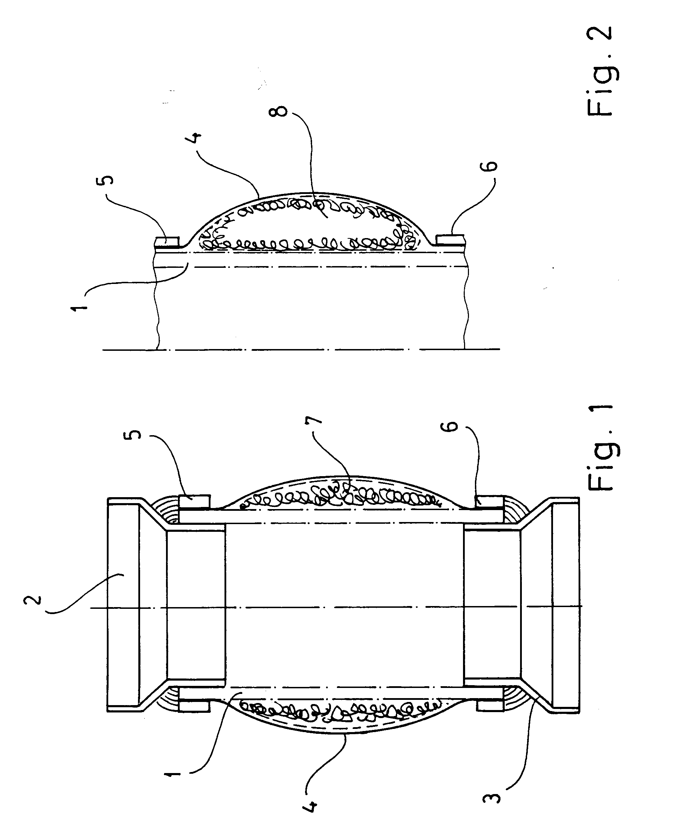

Das in Fig. 1 dargestellte Leitungselement weist einen inneren Metallschlauch 1 auf, der ein Wellschlauch bzw. Metallbalg, ein Wickelschlauch, beispielsweise Agraffschlauch oder auch eine Kombination dieser beiden Schläuche sein kann. Der Metallschlauch 1 ist an seinen beiden Enden mit Anschlußstutzen 2, 3 zur Verbindung mit nicht dargestellten weiterführenden Rohren der Abgasleitung verbunden.

Begleitet wird der Metallschlauch 1 außen von einer Längsabstützung 4, beispielsweise einem Geflechtsschlauch aus Metalldraht, dessen Enden an den Enden des Metallschlauches 1 durch Ringe 5, 6 festgelegt sind, die von außen gegen die Enden des Metallschlauches 1 gepreßt oder mit diesen verschweißt sind.

Zwischen Metallschlauch 1 und Längsabstützung 4 ist ein hohlzylindrisches, in seiner Außenkontur tonnenförmiges Dämpfungskissen 7 angeordnet, das sich über die gesamte Länge des Metallschlauches 1 zwischen dessen Enden erstreckt. Das Dämpfungskissen 7 kann aus einem Metalldrahtgestricke, Metallfasergewirk, Metallgeflecht oder Metallgewebe zusammengepreßt und dadurch auf die aus Fig. 1 ersichtliche Form gebracht sein.

Will sich der Metallschlauch 1 betriebsbedingt längen, so führt dies bei der Längsabstützung 4 dazu, daß diese sich an die Außenseite des Metallschlauches 1 anlegen möchte, also strecken möchte. Diese Bewegung wird durch das Dämpfungskissen 7 behindert bzw. gebremst, so daß insbesondere bei schlagartigen Belastungen keine harte Beanspruchung sowohl des Metallschlauches 1 als der Längsabstützung 4 stattfinden kann.

Diese Federungs- bzw. Dämpfungswirkung tritt gleichermaßen auf, wenn zwischen den Enden des Metallschlauches 1 eine Lateralbewegung, eine Winkelbewegung oder eine Torsionalbewegung stattfindet.

Fig. 2 zeigt eine Variante zum Gegenstand gemäß Fig. 1, indem dort das Dämpfungskissen 8 als Hohlring ausgebildet ist, wodurch sich entsprechend geänderte Federungs- bzw. Dämpfungseigenschaften ergeben, die zunächst sehr weich, später aber zunehmend härter gestaltet sind.

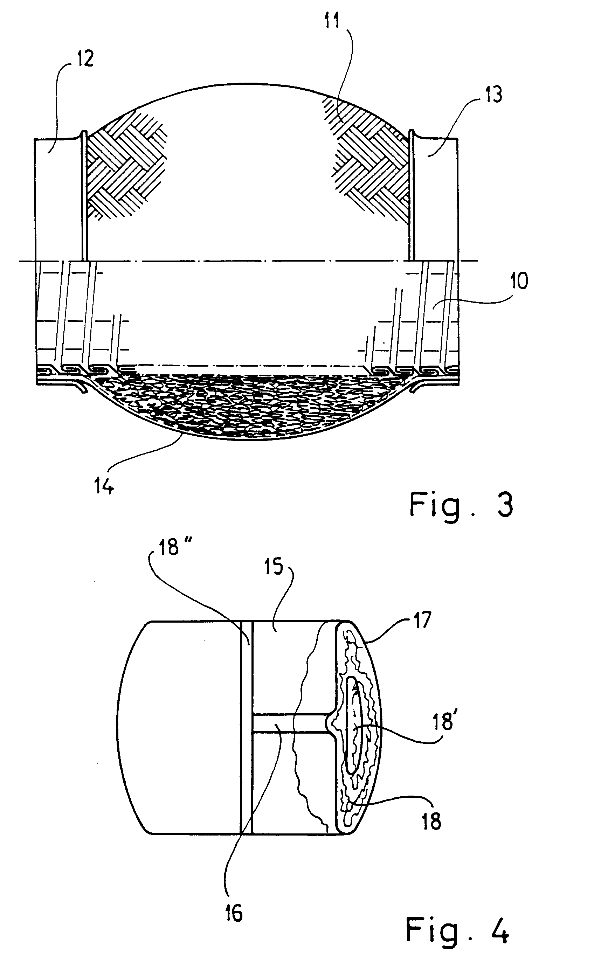

Fig. 3 zeigt einen als Agraffschlauch, also einen durch Wickeln eines Metallbandes hergestellten Metallschlauch 10, dessen Längsabstützung durch einen Geflechtsschlauch 11 gegeben ist, der wieder an den Enden durch Klemmringe 12, 13 auf den Enden des Metallschlauches 10 festgelegt ist.

Zwischen Geflechtsschlauch 11 und Metallschlauch 10 ist ein Dämpfungskissen 14 angeordnet, das aus einem Metallfasergewirk bestehen mag.

Wie ersichtlich, sind die Klemmeringe 12, 13 in Richtung auf die Mitte des Metallschlauches 10 nach außen aufgebördelt, so daß sich hier der Geflechtsschlauch 11 bei Bewegungen zwischen den Enden des Metallschlauches 10 spannungsfrei abwälzen kann.

Fig. 4 zeigt den Gegenstand gemäß Fig. 1 und 3, wobei der Metallschlauch 15 als Ringwellschlauch ausgebildet sein soll, von dem nur eine Welle 16 dargestellt ist.

Die Längsabstützung ist wiederum durch einen Geflechtsmantel 17 gegeben, der in der bereits beschriebenen Weise an den Enden des Metallschlauches 15 befestigt ist.

Zwischen Metallschlauch 15 und Geflechtsmantel 17 ist ein Dämpfungskissen 18 angeordnet, das ebenfalls in der bereits beschriebenen Weise ausgebildet ist jedoch mit der Besonderheit, daß ein auf der Innenseite des Dämpfungskissens 18 umlaufender Vorsprung 19 in die Welle 16 eingreift und damit das Dämpfungskissen 18 in Axialrichtung gegen Verschieben sichert, so daß das Dämpfungskissen nicht axial auf dem Metallschlauch 15 verrutschen kann. Für die Montage ist das Dämpfungskissen in Radialrichtung wenigstens einmal bei 18'' geteilt, so daß es für den Einbau geringfügig aufgebogen werden kann.

Außerdem zeigt Fig. 4 ein Beispiel dafür, wie in einem Dämpfungskissen 18 ein Bestandteil 18' anderer Federungs- und Dämpfungseigenschaften vom Dämpfungskissen 18 allseits umgeben eingelagert sein kann.

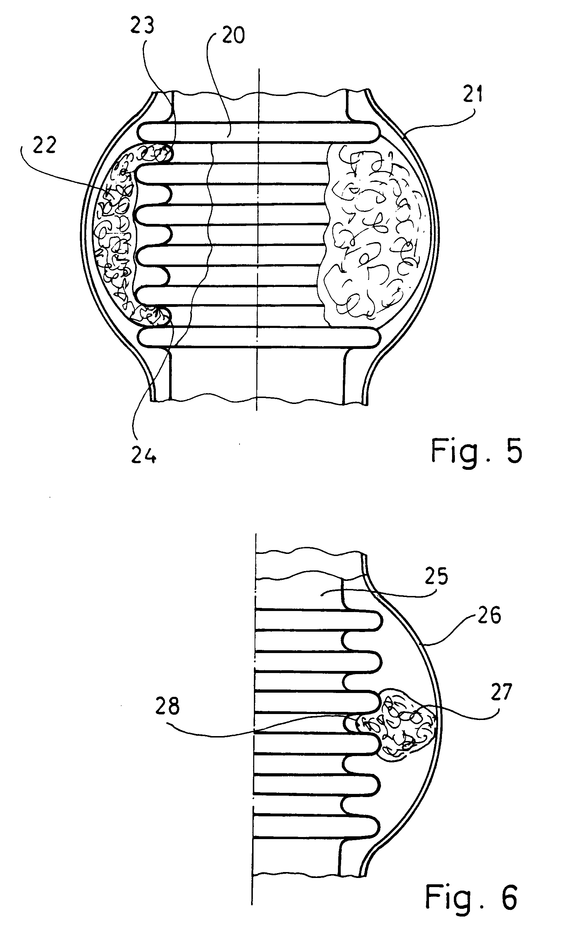

Fig. 5 zeigt mehr ins einzelne einen Metallschlauch 20 in Form eines Ringwellschlauches mit Längsabstützung 21 durch einen Geflechtsmantel. Hier ist das Dämpfungskissen 22 mit zwei inneren Vorsprüngen 23, 24 versehen, die aus dem vorstehend genannten Grunde in Wellen des Metallschlauches 20 eingreifen und damit das Dämpfungskissen 22 in Axialrichtung auf den Metallschlauch 20 fixieren. Auch hier ist eine wenigstens einmal geteilte Ausbildung des Dämpfungskissens zweckmäßig.

Fig. 6 zeigt eine Variante zum Gegenstand gemäß Fig. 5. Hier ist auf einem Metallschlauch 25 mit Längsabstützung 26 ein Dämpfungskissen 27 in Form eines in Axialrichtung gesehen kurzen, wiederum zweckmäßigerweise geteilten Ringes aufgesetzt, der mit einem inneren Vorsprung 28 in eine der Wellen des Wellschlauches 25 eingreift und dadurch in Axialrichtung auf dem Wellschlauch 25 festgelegt ist.

Fig. 6 zeigt also am Beispiel, daß das Dämpfungskissen 27 nicht unbedingt die gesamte axiale Länge des inneren Metallschlauches 25 überdecken muß, wenn die jeweiligen Betriebsbedingungen ein geringeres Volumen des Dämpfungskissens gestatten.

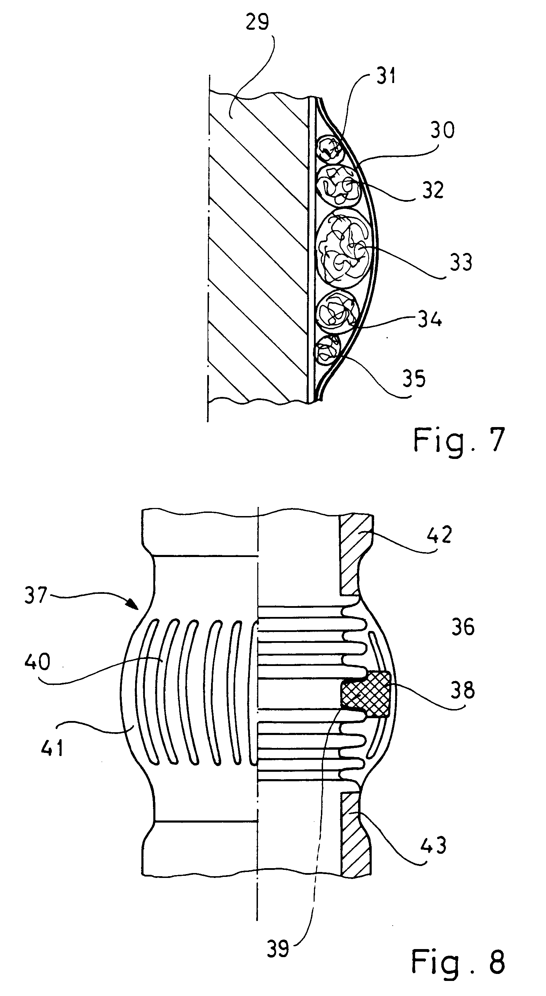

Fig. 7 zeigt in Weiterbildung des Gegenstand gemäß Fig. 6 in Verbindung mit Fig. 5, daß ausgehend von einem Metallschlauch 29 mit Längsabstützung 30 das Dämpfungskissen sich auch aus mehreren, in Axialrichtung nebeneinander liegenden Ringen 31 bis 35 zusammensetzen kann, die im Falle der Fig. 7 aneinander liegen. Selbstverständlich ist auch eine Variante möglich, nach der diese Ringe einen axialen Abstand gegeneinander haben. Das kann man sich leicht vorstellen, wenn man sich beispielsweise die Ringe 32 und 34 fortdenkt.

Allen bisher beschriebenen Ausführungsformen kann gemeinsam sein, daß das Dämpfungskissen zur Formstabilisierung ummantelt ist, beispielsweise durch eine Metallfolie oder durch Umflechtung. Dies ist insbesondere bei den Ausführungsformen gemäß Fig. 6 und 7 zweckmäßig, da dort die Dämpfungskissen 27 bzw. 31 bis 35 teilweise nicht über ihren gesamten Umfang gegen angrenzende Bauteile anliegen.

Fig. 8 zeigt eine besondere Ausbildung für die Längsabstützung eines Metallschlauches 36 in Form eines ringgewellten Schlauches. Dabei ist zwischen der Längsabstützung 37 und dem Metallschlauch 36 ein Dämpfungskissen 38 in Form eines in Axialrichtung gesehen kurzen Ringes angeordnet, wie diese bereits anhand der Fig. 6 beschrieben wurde. Der Ring 38 greift mit einem inneren Vorsprung 39 in die Profilierung des Metallschlauches 36 ein.

Die Längsabstützung 37 ist aus einem verhältnismäßig dünnwandigen Rohr dadurch hergestellt, daß dieses Rohr in seiner Längsmitte tonnenförmig radial aufgeweitet ist und mit achsparallelen, gleichmäßig über den Umfang verteilten Einschlitzungen 40 versehen wurde, durch die Längsstege 41 der Längsabstützung verbleiben.

Die Enden der Längsabstützung 37 sind im vorliegenden Falle zusammen mit den Enden des Metallschlauches 36 auf Anschlußstutzen 42, 43 festgelegt, durch die die Verbindung mit den nicht dargestellten, weiterführenden Rohrleitungen der Abgasanlage erfolgt.

Auch im Falle der Fig. 8 will sich der Außendurchmesser der Längsabstützung 37 bei einer Längung des Metallschlauches 36 reduzieren, so daß sich die gleichen, bereits anhand der Fig. 1 beschriebenen Wirkungen ergeben einschließlich des Verhaltens dann, wenn der Metallschlauch 36 zwischen seinen Enden einem Lateral- oder Winkelversatz unterworfen oder torsional belastet wird.

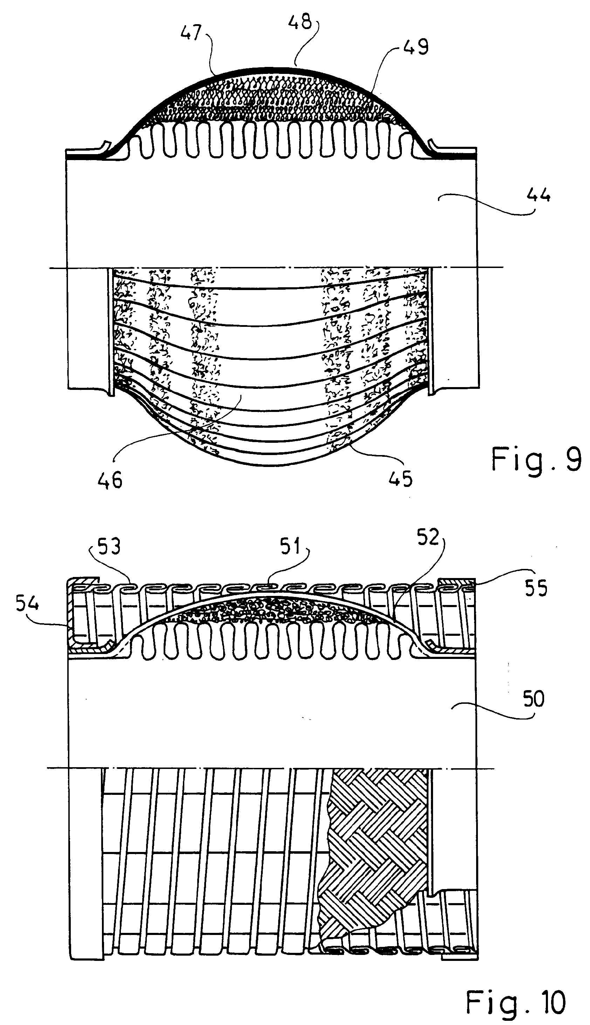

Fig. 9 zeigt in Anlehnung an den Gegenstand gemäß Fig. 8 eine Bauform, bei der ein Metallschlauch 44 in Form eines ringgewellten Schlauches vorhanden ist. Hier ist jedoch die Längsabstützung durch gleichmäßig über den Umfang verteilte und an den Enden des Metallschlauches 44 festgelegte Drähte oder Seile 45 gebildet, die ein Dämpfungskissen 46 umspannen.

Im Falle der Fig. 9 ist das Dämpfungskissen 46 durch achsparallele Schichten 47, 48, 49 gebildet, die aus unterschiedlichen Materialien und/oder unterschiedlich verdichteten Materialabschnitten bestehen können so, daß das Dämpfungskissen 46 insgesamt eine differenzierte Federungs- bzw. Dämpfungseigenschaft aufweist, die insbesondere so gestaltet sein kann, daß mit zunehmender Belastung auch die Federungs- bzw. Dämpfungseigenschaft des Dämpfungskissens 46 zunimmt. Auch hier kann wieder vorgesehen sein, daß die einzelnen Lagen 47 bis 49 durch eine Umhüllung hinsichtlich ihrer Form stabilisiert sind. Auch könnte die innere Lage 49 mit wenigstens einem nach innen ragenden, umlaufenden Vorsprung versehen sein, um das Dämpfungskissen 46 in Axialrichtung auf dem Metallschlauch zu fixieren.

Schließlich zeigt Fig. 10 ein Beispiel dafür, wie in Ergänzung der bisherigen Bauformen auch eine Dämpfung gegen Stauchung des Metallschlauches 50, der in diesem Falle wiederum ein Ringwellschlauch ist, möglich ist. Dazu ist außerhalb der das Dämpfungskissen 51 einfassenden Längsabstützung 52 beispielsweise in Form eines Geflechtsschlauches ein Stützmantel 53 vorgesehen, der im vorliegenden Falle die Form eines Hohlzylinders aufweist und außen an der Längsabstützung 52 anliegt. Der Stützmantel 53 ist als durch schraubengangförmiges Wickeln eines Metallbandes hergestellter Agraffschlauch ausgebildet, der mit seinem einen, im vorliegenden Falle linken Ende über einen ringförmigen Steg 54 mit dem zugeorndeten Ende des Metallschlauches 50 verbunden ist, während sein anderes, im vorliegenden Falle rechtes Ende frei ist. Ein außen aufgesetzter Ring 55 dient lediglich der endständigen Fassung des Agraffschlauchs 53.

Wird nun der Metallschlauch 50 axial gestaucht bzw. durch zwischen seinen Enden auftretende Lateral-, Angular- bzw. Torsionalbewegungen wenigstens über den Umfang gesehen partiell einer Stauchbewegung unterworfen, so führt dies dazu, daß sich die Längsabstützung 52 verursacht durch ein Zusammenschieben des Kissens 51 radial aufweiten will. Diese Bewegung wird jedoch durch den Stützmantel 53 blockiert, so daß insoweit auch gegen derartige Stauchbewegungen das Dämpfungskissen 51 seine Wirkung entfalten kann.

Es versteht sich von selbst, daß die anhand der Fig. 10 dargestellte Ergänzung durch einen Stützmantel auch für alle vorher beschriebenen Ausführungsformen gleichermaßen in Frage kommt, falls dies aus betriebstechnischen Gründen zweckmäßig erscheint.

Was die Ausbildung des Stützmantels 53 betrifft, so kann dieser selbstverständlich beispielsweise auch ein starres Rohr sein. Dadurch würde jedoch vergleichsweise die Lateral- und Winkelbeweglichkeit des Leitungselementes begrenzt werden, so daß der dargestellten Ausbildung als Agraffschlauch als flexibles Leitungselement der Vorzug zu geben ist.

## Patentansprüche

1. Leitungselement, insbesondere für die Abgasleitung von Verbrennungskraftmaschinen, bestehend aus einem gewellten und/oder einem aus wenigstens einem Band gewickelten Metallschlauch (1, 10, 15, 20, 25, 29, 36, 44, 50) mit außerhalb des Metallschlauches entlang diesem angeordneter, mit den Anschlußenden des Metallschlauches verbundenen Mitteln (4, 11, 21, 26, 30, 37, 45, 52) zur flexiblen Abstützung des Metallschlauches gegen betriebsbedingte Längenänderungen,
dadurch gekennzeichnet,
daß zwischen Metallschlauch (1, 10, 15, 20, 25, 29, 36, 44, 50) und den Mitteln zur Längsabstützung (4, 11, 21, 26, 30, 37, 45, 52) ein ringförmiges, flexibles, federnd elastisches Dämpfungskissen (7, 14, 18, 22, 27, 31 bis 35, 38, 46, 51) aus hitzebeständigem Material angeordnet ist, und daß die Längsabstützung zwischen ihren Enden tonnenförmig radial aufgeweitet ist.

2. Leitungselement nach Anspruch 1,
dadurch gekennzeichnet,
daß die Längsabstützung (4, 11, 17, 21, 26, 30, 52) durch ein hohlzylindrisches Metalldrahtgeflecht gebildet ist.

3. Leitungselement nach Anspruch 1,
dadurch gekennzeichnet,
daß die Längsabstützung (37) durch ein rohrförmiges, zwischen den Enden tonnenförmig radial aufgeweitetes Teil gebildet ist, und daß das Teil zwischen seinen Enden über den Umfang gleichmäßig verteilt angeordnete, achsparallele Schlitze (40) aufweist.

4. Leitungselement nach Anspruch 1,
dadurch gekennzeichnet,
daß die Längsabstützung (45) durch über den Umfang des Metallschlauches (44) gleichmäßig verteilt angeordnete, zum Metallschlauch achsparallele Drähte, Seile oder dergleichen gebildet ist, die mit ihren Enden an den Enden des Metallschlauches festgelegt bzw. wenigstens mittelbar befestigt sind.

5. Leitungselement nach Anspruch 1,
dadurch gekennzeichnet,
daß radial außerhalb der Längsabstützung (52) an dieser anliegend ein hohlzylindrischer Stützmantel (53) vorgesehen ist und daß der Stützmantel axial festgelegt, beispielsweise mit einem seiner Enden am zugeordneten Ende des Metallschlauches festgelegt (bei 54) ist.

6. Leitungselement nach Anspruch 5,
dadurch gekennzeichnet,
daß der Stützmantel (53) ein flexibler Metallschlauch ist.

7. Leitungselement nach Anspruch 6,
dadurch gekennzeichnet,
daß der Stützmantel (53) ein durch Wickeln eines Metallbandes hergestellter Agraffschlauch ist.

8. Leitungselement nach Anspruch 1,
dadurch gekennzeichnet,
daß das Dämpfungskissen (7, 8, 14, 18, 22, 27, 31 bis 35, 38, 46, 51) aus einem Metalldrahtgestricke und/oder mit Metallfasergewirk und/oder Metalldrahtgeflecht und/oder Metalldrahtgewebe besteht.

9. Leitungselement nach Anspruch 8,
dadurch gekennzeichnet,
daß im Dämpfungskissen (7, 8, 14, 18, 22, 27, 31 bis 35, 38, 46, 51) zusätzlich Füll- und/oder Schmierstoffe enthalten sind.

10. Leitungselement nach Anspruch 8,
dadurch gekennzeichnet,
daß sich das Dämpfungskissen (7, 8, 14, 18, 22, 31 bis 35, 46, 51) über im wesentlichen die gesamte Länge des Metallschlauches (1, 10, 15, 20, 29, 44, 50) zwischen dessen Anschlußenden erstreckt.

11. Leitungselement nach Anspruch 8,
dadurch gekennzeichnet,
daß sich wenigstens ein Dämpfungskissen (27, 31 bis 35, 38) über einen axialen Teilbereich des Metallschlauches (25, 29, 36) erstreckt.

12. Leitungselement nach Anspruch 8,
dadurch gekennzeichnet,
daß das Dämpfungskissen (7, 8, 14, 18, 22, 27, 31 bis 35, 38, 46, 51) entsprechend seiner endgültigen Einbausituation vorgeformt ist.

13. Leitungselement nach Anspruch 12,
dadurch gekennzeichnet,
daß das Dämpfungskissen (7, 8, 14, 18, 22, 27, 31 bis 35, 38, 46, 51) eine Umhüllung aufweist.

14. Leitungselement nach Anspruch 13,
dadurch gekennzeichnet,
daß die Umhüllung eine Geflechtsummantelung, eine Ummantelung aus Stahlwolle, eine Metallfolie oder dergleichen ist.

15. Leitungselement nach Anspruch 8,
dadurch gekennzeichnet,
daß das Dämpfungskissen (46) mehrlagig (47 bis 49) aufgebaut ist.

16. Leitungselement nach Anspruch 15,
dadurch gekennzeichnet,
daß die Lagen (47 bis 49) des Dämpfungskissens (46) aus unterschiedlichen Materialien bestehen.

17. Leitungselement nach Anspruch 8,
dadurch gekennzeichnet,
daß das Dämpfungskissen (7, 8, 14, 18, 22, 27, 31 bis 35, 38, 46, 51) über seinen axialen und/oder radialen Querschnitt unterschiedliche Verdichtungsgrade aufweist.

18. Leitungselement nach Anspruch 8,
dadurch gekennzeichnet,
daß bei einem Metallschlauch (15, 20, 25, 36) in Form eines Wellschlauches der Innenumfang des Dämpfungskissens (18, 22, 27, 38) in wenigstens einen Umlauf der Schlauchwellung eingeformt ist.

## Claims

1. Duct element, particularly for exhaust ducts of internal-combustion engines, comprising a metallic hose (1, 10, 15, 20, 25, 29, 36, 44, 50) which is corrugated and/or is wound from at least one strip, and means (4, 11, 21, 26, 30, 37, 45, 52) arranged externally of and along this metallic hose and connected to the coupling ends of the metallic hose for the flexible support of the metallic hose against changes in length arising in operation,
characterised in that
an annular, flexible, resiliently elastic damping cushion (7, 14, 18, 22, 27, 31 to 35, 38, 46, 51) of heat-resistant material is arranged between the metallic hose (1, 10, 15, 20, 25, 29, 36, 44, 50) and the longitudinal support means (4, 11, 21, 26, 30, 37, 45, 52), and that between its ends the longitudinal support is radially widened into a barrel shape.

2. Duct element according to claim 1,
characterised in that
the longitudinal support (4, 11, 17, 21, 26, 30, 52) is formed by a hollow cylindrical metallic wire braid.

3. Duct element according to claim 1,
characterised in that
the longitudinal support (37) is formed by a tubular part that is radially widened between its ends into a barrel shape, and that between its ends the part has slits (40) that are circumferentially uniformly distributed and are parallel to the axis.

4. Duct element according to claim 1,
characterised in that
the longitudinal support (45) is formed by wires, cables or the like uniformly distributed over the periphery of the metallic hose (44) and parallel to the axis of the metallic hose, the ends of the wires, cables or the like being secured or at least indirectly fixed to the ends of the metallic hose.

5. Duct element according to claim 1,
characterised in that
a hollow cylindrical supporting jacket (53) is provided radially externally of and bearing against the longitudinal support (52), and that the supporting jacket is axially secured, for example secured at one of its ends (at 54) to the associated end of the metallic hose.

6. Duct element according to claim 5,
characterised in that
the supporting jacket (53) is a flexible metallic hose.

7. Duct element according to claim 6,
characterised in that
the supporting jacket (53) is an interlocked hose made from a metallic strip by winding.

8. Duct element according to claim 1,
characterised in that
the damping cushion (7, 8, 14, 18, 22, 27, 31 to 35, 38, 46, 51) consists of a knitted metallic wire mesh and/or metallic fibre texture and/or metallic wire braid and/or metallic wire cloth.

9. Duct element according to claim 8,
characterised in that
filler and/or lubricant materials are additionally contained in the damping cushion (7, 8, 14, 18, 22, 27, 31 to 35, 38, 46, 51).

10. Duct element according to claim 8,
characterised in that
the damping cushion (7, 8, 14, 18, 22, 31 to 35, 46, 51) extends substantially along the whole length of the metallic hose (1, 10, 15, 20, 29, 44, 50) between the coupling ends of the latter.

11. Duct element according to claim 8,
characterised in that
at least one damping cushion (27, 31 to 35, 38) extends over an axial section of the metallic hose (25, 29, 36).

12. Duct element according to claim 8,
characterised in that
the damping cushion (7, 8, 14, 18, 22, 27, 31 to 35, 38, 46, 51) is preformed in accordance with its final mounting location.

13. Duct element according to claim 12,
characterised in that
the damping cushion (7, 8, 14, 18, 22, 27, 31 to 35, 38, 46, 51) has a sheath.

14. Duct element according to claim 13,
characterised in that
the sheath is a braid jacket, a steel wool jacket, a metallic foil or the like.

15. Duct element according to claim 8,
characterised in that
the damping cushion (46) has a multi-layered (47 to 49) construction.

16. Duct element according to claim 15,
characterised in that
the layers (47 to 49) of the damping cushion (46) are made of different materials.

17. Duct element according to claim 8,
characterised in that
over its axial and/or radial cross-section the damping cushion (7, 8, 14, 18, 22, 27, 31 to 35, 38, 46, 51) has different degrees of compression.

18. Duct element according to claim 8,
characterised in that
when the metallic hose (15, 20, 25, 36) is in the form of a corrugated hose the internal circumference of the damping cushion (18, 22, 27, 38) is moulded into at least one turn of the hose corrugation.

## Revendications

1. Élément de conduite, notamment pour le tuyau d'échappement d'un moteur à combustion interne, constitué par un tuyau métallique ondulé et/ou un tuyau métallique constitué par l'enroulement d'au moins une bande (1,10,15, 20,25,29,36,44,50), comportant des moyens (4,11,21,26,30, 37,45,52), disposés à l'extérieur du tuyau métallique et le long de ce dernier et reliés aux extrémités de raccordement du tuyau métallique et servant à réaliser un soutien flexible du tuyau métallique d'une manière protégée vis-à-vis de variations de longueur conditionnées par le fonctionnement, caractérisé en ce
qu'entre le tuyau métallique (1,10,15,20,25,29,36,44,50) et les moyens de soutien longitudinal (4,11,21,26,30,37,45,52) est disposé un coussin amortisseur élastique annulaire flexible (7,14,18,22,27,31 à 35,38,46,51) réalisé en un matériau résistant à la chaleur, et que les moyens de soutien longitudinal sont élargis radialement en forme de tonneau entre leurs extrémités.

2. Élément de conduite selon la revendication 1, caractérisé en ce que les moyens de soutien longitudinal (4,11,17,21,26,30,52) sont formés par un treillis de fils métalliques de forme cylindrique creuse.

3. Élément de conduite selon la revendication 1, caractérisé en ce que les moyens de soutien longitudinal (37) sont formés par une partie tubulaire élargie radialement en forme de tonneau entre ses extrémités, et que cette partie située entre les extrémités des moyens de soutien longitudinal possède des fentes (40) qui sont parallèles à l'axe et sont réparties uniformément sur la périphérie.

4. Élément de conduite selon la revendication 1, caractérisé en ce que les moyens de soutien longitudinal (45) sont constitués par des fils, des câbles ou analogues, qui sont répartis uniformément sur la périphérie du tuyau métallique (44), sont parallèles à l'axe de ce tuyau et sont fixés par leurs extrémités ou au moins de façon indirecte aux extrémités du tuyau métallique.

5. Élément de conduite selon la revendication 1, caractérisé en ce qu'une enveloppe de support cylindrique creuse (53) est disposée radialement à l'extérieur des moyens de soutien longitudinal (52) et s'applique contre ces moyens et que l'enveloppe de support est fixée axialement, la fixation (en 54) étant réalisée par exemple au moyen de l'une de ses extrémités sur l'extrémité associée du tuyau métallique.

6. Élément de conduite selon la revendication 5, caractérisé en ce que l'enveloppe de support (53) est un tuyau métallique flexible.

7. Élément de conduite selon la revendication 6, caractérisé en ce que l'enveloppe de support (53) est un tuyau à attache fabriqué par enroulement d'une bande métallique.

8. Élément de conduite selon la revendication 1, caractérisé en ce que le coussin amortisseur (7,8,14,18,22, 27,31 à 35,38,46,51) est réalisé en un treillis de fils métalliques et/ou en tricot de fibres métalliques et/ou en un treillis de fils métalliques et/ou un tissu de fils métalliques.

9. Élément de conduite selon la revendication 8, caractérisé en ce que le coussin amortisseur (7,8,14,18,22, 27,31 à 35,38,46,51)) contient en outre des substances de remplissage et/ou des substances lubrifiantes.

10. Élément de conduite selon la revendication 8, caractérisé en ce que le coussin amortisseur (7,8,14,18,22, 31 à 35,46,51) s'étend essentiellement sur toute la longueur du tuyau métallique (1,10,15,20,29,44,50) entre les extrémités de raccordement de ce tuyau.

11. Élément de conduite selon la revendication 8, caractérisé en ce qu'au moins un coussin amortisseur (27,31 à 35,38) s'étend sur une zone axiale partielle du tuyau métallique (25,29,36).

12. Élément de conduite selon la revendication 8, caractérisé en ce que le coussin amortisseur (7,8,14,18,22, 27,31 à 35,38,46,51) est préformé en fonction de sa situation finale de montage.

13. Élément de conduite selon la revendication 12, caractérisé en ce que le coussin d'amortisseur (7,8,14, 18,22,27,31 à 35,38,46,51) comporte une enveloppe.

14. Élément de conduite selon la revendication 13, caractérisé en ce que l'enveloppe est une enveloppe formée d'un treillis, une enveloppe en laine d'acier, une feuille métallique ou analogue.

15. Élément de conduite selon la revendication 8, caractérisé en ce que le coussin amortisseur (46) est formé de plusieurs couches (47 à 49).

16. Élément de conduite selon la revendication 15, caractérisé en ce que les couches (47 à 49) du coussin amortisseur (46) sont réalisées en des matériaux différents.

17. Élément de conduite selon la revendication 8, caractérisé en ce que le coussin amortisseur (7,8,14,18,22, 27,31 à 35,38,46,51) possède des degrés de tassement différents sur sa section transversale axiale et/ou radiale.

18. Élément de conduite selon la revendication 8, caractérisé en ce que dans le cas d'un tuyau métallique (15,20,25,36) possédant la forme d'un tuyau ondulé, la périphérie intérieure du coussin amortisseur (18,29,27,38) est conformée à l'état inséré dans au moins une spire de l'ondulation du tuyau.
